# FASCICULE DE BREVET EUROPEEN

(11) **EP 2 919 885 B1**
(45) Date de publication et mention de la délivrance du brevet: **07.08.2019**
(21) Numéro de dépôt: 13803139.8
(22) Date de dépôt: 13.11.2013
(51) Int. Cl.: B01D 46/00, B01D 46/10, B01D 46/52

(54) **PROCÉDÉ DE FABRICATION D'UN FILTRE**
VERFAHREN ZUR HERSTELLUNG EINES FILTERS
METHOD OF MANUFACTURING A FILTER

(30) Priorité: 13.11.2012 FR 1260783
(43) Date de publication de la demande: 23.09.2015
(60) Demande divisionnaire: 18177050.4
(73) Titulaire: NOVARES FRANCE, 92140 Clamart (FR)
(72) Inventeur: LEBRUN, Michel, F-62138 Auchy Les Mines (FR); BAZIN, Jean-Pierre, F-80800 Villers Bretonneux (FR); CARRON, Hervé, F-62590 Oignies (FR)
(74) Mandataire: Delorme, Nicolas
(86) Numéro de dépôt international: PCT/FR2013/052726
(87) Numéro de publication internationale: WO 2014/076417

(56) Documents cités:
- DE-A1- 19 522 850
- DE-C1- 4 002 078
- GB-A- 1 236 093

## Description

La présente invention concerne un procédé de fabrication d'un filtre, notamment un filtre destiné à la filtration de l'air pour véhicule automobile. De plus, la présente invention concerne un dispositif pour la mise en oeuvre du procédé de fabrication d'un filtre. Enfin, la présente invention concerne un filtre pour véhicule automobile.

Les filtres à air pour moteur de véhicules sont généralement fabriqués à partir d'un média en papier ou d'un média synthétique. Le document DE4002078 décrit un élément filtrant en tissu non tissé formé en tant qu'emballage plié qui est autoportant et est composé d'un non-tissé thermoscellable.

Il est connu du document DE19522850 un filtre à air composé d'un filtre filtrant plié en accordéon qui assure un contact étanche avec le boîtier.

Les procédés de fabrication des filtres papier ou des filtres synthétiques connus sont relativement similaires. Ces procédés comprennent notamment des étapes consistant à préformer des plis sur une bande de média et à déposer des cordons de colle à proximité des bords longitudinaux de la bande de sorte à rendre étanche les bords de chacun des plis et à maintenir la forme de ces derniers lors d'une étape de plissage du filtre et garantir le maintient des plis en place. Or, ces procédés de fabrication nécessitent une grande quantité de colle. De plus, il est nécessaire de chauffer la colle dans un fondoir avant son dépôt, ce qui prend du temps et est coûteux en énergie. Cumulé au prix de la colle, le coût de l'électricité utilisée pour préchauffer et maintenir la colle à la température souhaitée augmente significativement le coût de revient du filtre plissé. Par ailleurs, lorsque les cordons de colle déposés débordent légèrement de leur positionnement optimal, à proximité des bords longitudinaux de la bande, la colle entre en contact avec le dispositif de plissage. Ceci contribue à l'encrassage du dispositif de sorte que la bande se bloque dans le dispositif qui cale. Le fonctionnement de l'outil de production doit alors être interrompu pour un nettoyage. Par ailleurs, la portion bloquée du média est généralement endommagée et doit être mise au rébus. Ainsi, la durée des cycles et les coûts de production sont augmentés.

La présente invention vise à pallier un ou plusieurs de ces inconvénients. A cet effet, et selon un premier aspect, l'invention propose un procédé de fabrication d'un filtre, notamment un filtre destiné à la filtration de l'air pour véhicule automobile, le procédé comprenant les étapes consistant à :
a) Dérouler une bande de média filtrant comportant des fibres synthétiques, non tissées, présentant deux bords longitudinaux et guider la bande dans une direction d'avancement,
b) Réaliser une pluralité de rainages sur la bande de média filtrant selon une direction transversale aux bords longitudinaux,
c) Elever la température de deux zones longitudinales disposées à proximité chacune d'un bord longitudinal de la bande de média filtrant de manière à entrainer leur fusion, et
d) Plier la bande de média filtrant le long de chaque rainage de telle sorte qu'une portion d'une zone longitudinale disposée en amont d'un rainage dans le sens d'avancement de la bande de média filtrant soit soudée avec une portion d'une zone longitudinale disposée en aval de ce rainage dans le sens d'avancement de la bande.

Ainsi, un tel procédé de fabrication remplaçant l'étape de dépôt de cordons de colle pour le collage des plis du filtre par une étape de thermo-soudure permet de limiter la consommation de colle. Il n'est plus nécessaire de procéder au préchauffage d'une grande quantité de colle avant de démarrer le procédé de fabrication, ce qui réduit le temps de cycle. De plus, le procédé de thermo-soudure évite l'encrassage du dispositif de sorte que l'interruption du procédé de fabrication est évitée. Ainsi, les coûts globaux de ce procédé de fabrication de filtres sont diminués.

Selon une possibilité, le procédé comprend une étape e) consistant à déposer un cordon de colle longitudinal reliant les sommets des plis thermo-soudés à l'étape d), le cordon de colle étant de préférence disposé de façon centrée entre les deux bords longitudinaux de la bande. Par le terme 'pli', on entend dans le présent document, deux surfaces planes reliées entre elles par une arrête ou un sommet, ces surfaces étant constituées de la bande de média filtrant. Le cordon de colle ainsi déposé permet de rigidifier le média filtrant et assure un maintien sensiblement plan du filtre.

Selon une variante avantageuse, le procédé comprend une étape e) comprenant les sous-étapes suivantes consistant à
i) élever la température d'une cordelette comprenant des fibres synthétiques jusqu'à atteindre la température de fusion des fibres, et
ii) déposer la cordelette de façon longitudinale de sorte à relier les sommets des plis thermo-soudés à l'étape d) de plissage de la bande de média filtrant, la cordelette étant de préférence disposée de façon centrée entre les deux bords longitudinaux de la bande.

Cette cordelette déposée et thermo-soudée aux sommets des plis permet de maintenir le média filtrant plissé sous une forme sensiblement plane. En effet, la présence de cette cordelette permet le maintien d'un espacement régulier entre les sommets des plis et garantit cet espacement pendant la durée de vie de l'élément filtrant limitant ainsi la perte de charge lors de la rétention des poussières. Ce procédé permettant l'obtention de la thermo-soudure de la cordelette aux sommets des plis il n'est plus nécessaire d'utiliser de la colle, ce qui réduit les coûts de fabrication et le coût de revient du filtre. De plus, l'absence de colle dans le filtre obtenu par ce biais permet un recyclage facilité de ce dernier limitant encore les coûts de recyclage du filtre.

De préférence, la bande de média filtrant plissé comprend une face avant (couramment dénommée face 'coté air sale') destinée à recevoir l'air à filtrer et une face arrière (couramment dénommée face 'coté air propre' ou 'coté air filtré'), opposée à la première face avant, et l'étape ii) de dépôt de la cordelette est effectuée sur la face avant

Selon une disposition, l'étape e) comprend en outre une sous-étape iii) consistant à presser la cordelette déposée sur les sommets des plis.

De préférence, l'élévation de température est obtenue par air chaud pulsé. La formation de l'air chaud pulsé étant quasi immédiate, l'énergie fournie est limitée par comparaison à la chauffe de la colle et la fabrication du filtre peut être démarrée immédiatement.

Selon une variante, l'élévation de température est obtenue par laser, par infra rouge ou par flammes. Ceci permet d'adapter le procédé aux différents types de médias synthétiques utilisés notamment selon leur capacité à entrer en fusion.

Avantageusement, au moins une partie des fibres synthétiques de la bande de média filtrant et/ou de la cordelette comportent une âme et une enveloppe dont la température de fusion est moins importante que celle de l'âme. Ainsi, l'élévation de la température conduit à la fusion de l'enveloppe des fibres de sorte que lorsque ces enveloppes entrent en contact, elles se soudent les unes aux autres. L'âme de la fibre ayant un point de fusion plus élevée que celui de l'enveloppe, l'âme conserve une certaine rigidité pendant le traitement thermique. Cette rigidité de l'âme permet de conférer aux fibres du média les propriétés mécaniques suffisantes au guidage et à l'avancement de la bande de média filtrant, ainsi que pour le dépôt de la cordelette.

De préférence, l'âme comprend un matériau de polyester et l'enveloppe comporte un matériau de copolyester.

Selon une disposition, au moins une partie des fibres synthétiques de la bande de média filtrant et/ou la cordelette comportent une âme en polyester et une enveloppe en copolyester et une autre partie des fibres synthétiques de la bande de média filtrant et/ou la cordelette comprend des fibres totalement formées de polyester.

Selon une possibilité, la température de fusion du matériau de copolyester est comprise entre 100 et 120°C. Ainsi, il n'est pas nécessaire d'appliquer un traitement thermique très important.

Selon une réalisation concrète, l'élévation de température de l'étape c) et/ou de l'étape i) est réalisée jusqu'à atteindre une température comprise entre 100 et 250°C.

Selon une disposition, le procédé comprend une étape f) réalisée après l'étape e) consistant à découper la bande de média filtrant plissée à la longueur du filtre souhaitée. Il est ainsi possible de fabriquer des filtres de longueurs variées en fonction du cahier des charges imposé.

Selon un deuxième aspect, l'invention concerne un dispositif destiné à la mise en oeuvre du procédé de fabrication d'un filtre tel que précédemment décrit, le dispositif comprenant au moins deux buses de chauffage arrangées de sorte à souffler de l'air chaud pulsé, la chaleur de l'air étant adaptée pour élever la température des deux zones longitudinales de la bande de média filtrant selon l'étape c) du procédé et le dispositif comprenant des moyens de déroulement de la bande dans une direction d'avancement et deux vis sans fin disposées de part et d'autres de la direction d'avancement afin de réaliser l'étape d) consistant à plier la bande le long de chaque rainage, les deux vis sans fin étant disposées en aval des deux buses de chauffage dans la direction d'avancement.

Ainsi, le coût de ce dispositif est moins onéreux que celui d'un dispositif comportant des buses pour injection de colle, sa maintenance est réduite et sa consommation d'énergie est moins importante. De plus, les buses de chauffage permettent une élévation locale et précise de la température des zones longitudinales du média pour une thermo- soudure très localisée. Les vis sans fin permettent de mettre les zones longitudinales chauffées en contact pour une thermo-soudure en continu du filtre plissé conformément à l'étape d) du procédé.

De préférence, les deux vis sans fin sont disposées de part et d'autres de la direction d'avancement.

Selon une disposition, le dispositif comprend une rampe de chauffage par infrarouge destinée à préchauffée la bande de média filtrant et deux cylindres entrainés en rotation en sens opposé pour réaliser une pluralité de rainages dans la bande dans une direction transversale aux bords longitudinaux de la bande conformément à l'étape b) du procédé.

Selon une disposition, le dispositif comprend une bobine adaptée à délivrer une cordelette pour réaliser l'étape e) du procédé.

Selon une possibilité, le dispositif comprend une troisième buse de chauffage arrangée de sorte à souffler de l'air chaud pulsé de manière à entrainer la fusion de la cordelette conformément à la sous-étape i) du procédé.

Avantageusement, le dispositif comprend un tapis roulant entrainé en rotation par un premier rouleau et un deuxième rouleau, le tapis roulant étant adapté à l'entrainement de la bande de média filtrant plissé obtenu à l'étape d) du procédé. Dans cette configuration, le tapis roulant participe au dépôt de la cordelette conformément à la sous-étape ii) du procédé. Par ailleurs, le premier rouleau permet de réaliser la sous-étape iii) du procédé consistant à presser la cordelette sur les sommets de plis.

Selon une variante, le dispositif comprend un galet d'entrainement de la cordelette disposé en amont du tapis roulant dans le sens d'avancement de la bande de média filtrant plissé, le galet d'entrainement étant adapté à la réalisation des sous-étape ii) et iii) du procédé. En effet, le galet participe au dépôt de la cordelette sur les sommets des plis, conformément à l'étape ii) du procédé et également au pressage de la cordelette, contre les sommets des plis, conformément à l'étape iii) du procédé.

De préférence, le galet d'entrainement comprend un moyen d'élevation de la température de la cordelette conformément à l'étape i) du procédé. Ainsi, le galet d'entrainement regroupe les moyens permettant d'assurer les fonctions nécessaires à la réalisation des sous-étapes i) à iii) du procédé. Dans cette configuration où l'élévation de la température de la cordelette est réalisé par le galet d'entrainement, la troisième buse de chauffage n'est plus indispensable.

Selon un troisième aspect, l'invention concerne un filtre de véhicule automobile comprenant une bande d'un média filtrant plissé formé d'un matériau non tissé comportant des fibres synthétiques comprenant une âme en polyester et une enveloppe en copolyester, les plis de la bande du média filtrant plissé comprenant des thermo-soudures adaptées pour assurer l'étanchéité des bords des plis et le filtre comprenant une cordelette de fibres synthétiques similaires à celles formant la bande de média filtrant plissé, reliant longitudinalement les sommets des plis, la cordelette étant de préférence disposée de façon centrée entre les deux bords longitudinaux de la bande de média filtrant plissé.

Par l'expression 'bords des plis', on entend dans le présent document les deux extrémités des plis correspondant chacune à un bord longitudinal de la bande de média filtrant avant plissage selon l'étape d) du procédé selon l'invention.

De plus, la thermo-soudure étant localisée sur des zones longitudinales précises, le filtre présente une plus grande surface disponible pour la filtration de l'air par comparaison avec un filtre dont les plis sont collés par des cordons de colle. Ainsi, le filtre en média synthétique présente alors une grande capacité de filtration et une grande longévité

Par ailleurs, l'absence totale de cordons de colle permet un recyclage facilité du filtre et une diminution du coût de revient de celui-ci.

D'autres aspects, buts et avantages de la présente invention apparaîtront mieux à la lecture de la description suivante d'un mode de réalisation de celle-ci, donnée à titre d'exemple non limitatif et faite en référence aux dessins annexés. La figure ne respecte pas nécessairement l'échelle de tous les éléments représentés de sorte à améliorer leur lisibilité. Dans la suite de la description, par souci de simplification, des éléments identiques, similaires ou équivalents des différentes formes de réalisation portent les mêmes références numériques.
La figure 1 est une vue schématique illustrant la mise en oeuvre du procédé de fabrication d'un filtre selon un mode de réalisation de l'invention.
La figure 2 est une vue illustrant une portion agrandie d'un filtre pour véhicule automobile selon un mode de réalisation de l'invention.
La figure 3 est une vue schématique illustrant des étapes complémentaires de mise en oeuvre du procédé de fabrication d'un filtre, selon un mode de réalisation de l'invention.
La figure 4 est une autre vue schématique de dessous illustrant les étapes représentées à la figure 3.

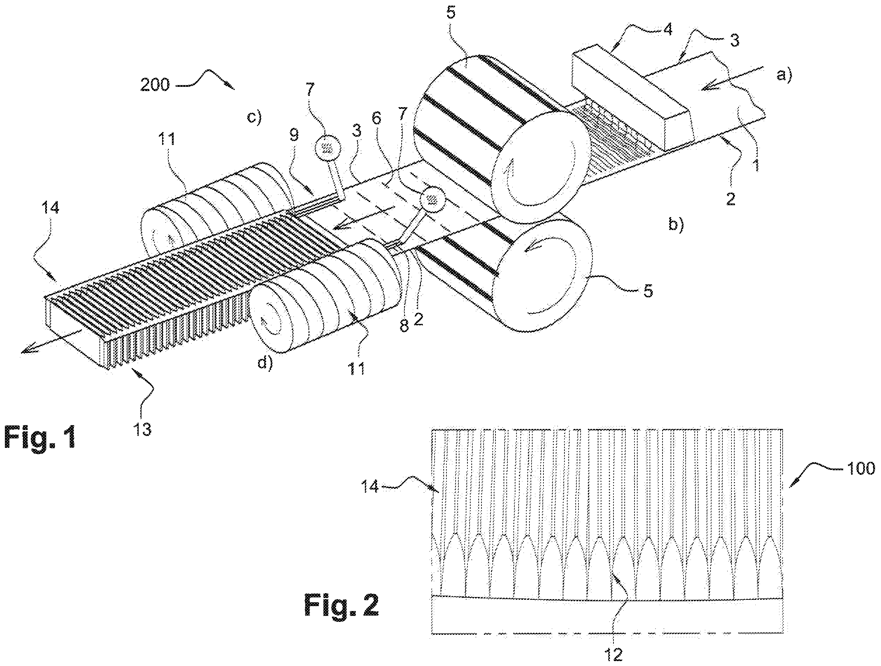

La figure 1 illustre le déroulement du procédé de fabrication d'un filtre 100 pour véhicule automobile dans un dispositif 200 destiné à la mise en oeuvre de ce procédé à partir d'une bande 1 de média filtrant, celle-ci comprend une face avant 13 et une face arrière 14 opposée à la face avant 13, la face avant 13 étant la plus adaptée à recevoir et à filtrer l'air. La bande 1 de média filtrant de fibres synthétiques, non tissées, et présentant deux bords longitudinaux 2,3 est déroulée et guidée par des moyens de déroulement du dispositif 200, dans une direction d'avancement dans le dispositif 200, schématisée par les flèches obliques, selon l'étape a) du procédé. Un traitement thermique effectué sous une rampe de chauffage 4 par infrarouge préchauffe la bande 1 de média filtrant qui circule ensuite entre deux cylindres 5 entrainés en rotation en sens opposé pour y réaliser une pluralité de rainages 6 conformément à l'étape b) du procédé. Comme on peut le voir sur la figure 1, les rainages 6 s'orientent selon une direction transversale aux bords longitudinaux 2,3 de la bande 1.

Il est entendu que tout autre moyen équivalent connu de formation de rainages 6 conformément à l'étape b) du procédé peut être utilisé sans sortir du cadre de la présente invention.

Puis la bande 1 de média filtrant circule sous deux buses de chauffage 7 selon le dispositif 200 de l'invention, arrangées de sorte à chauffer localement deux zones longitudinales 8, 9 disposées à proximité chacune d'un bord longitudinal 2,3 de la bande 1 conformément à l'étape c) du procédé. Les buses de chauffage 7 permettent notamment de souffler de l'air chaud pulsé. La température atteinte au niveau des zones longitudinales peut être comprise entre 100 et 250°C, de sorte à entrainer leur fusion. La bande 1 de média filtrant comporte en effet un textile non tissé de fibres synthétiques. Ces fibres comportent une âme et une enveloppe dont le point de fusion est plus bas que celui de l'âme. L'âme peut être en polyester et l'enveloppe peut être en copolyester par exemple mais d'autres matériaux synthétiques peuvent être utilisés pour former l'âme et l'enveloppe. Le point de fusion du copolyester peut être compris entre 100 et 120 °C par exemple. Ainsi, lors de l'élévation de la température au niveau des zones longitudinales 8,9, les enveloppes des fibres entrent en fusion tandis que les âmes des fibres, moins sensibles à la température, restent assez rigides pour assurer la tenue mécanique et l'avancement de la bande 1. De la sorte, l'élévation de température réalisée au niveau des deux zones longitudinales 8,9 permet l'obtention d'une thermo-soudure jusqu'au niveau des bords longitudinaux 2,3 de la bande 1, correspondants aux bords des plis, de sorte à garantir l'étanchéité latérale de ces derniers. La thermo-soudure reste confinée sur les bords des plis sans trop s'étendre vers le centre du média filtrant comme pourrait le faire de la colle, de sorte à ne pas réduire la surface de filtration utile de celui-ci.

Selon des variantes de réalisation non illustrées, l'étape c) d'élévation de la température du procédé de fabrication peut être réalisée de manière non limitative partout moyen permettant un chauffage localisé comme par exemple par traitement laser, infrarouge ou par flammes.

Comme représenté sur la figure 1, deux vis sans fin 11 du dispositif 200 de mise en oeuvre du procédé, disposées de part et d'autre de la direction d'avancement de la bande 1, permettent de plier la bande 1 de média filtrant selon les rainages 6 formés à l'étape b) et de mettre en contact les bords des plis ainsi formés. La température des enveloppes des fibres est telle que lors du contact, une portion d'une zone longitudinale 8, 9 disposée en amont d'un rainage 6 se soude à une portion d'une zone longitudinale 8, 9 disposée en aval, et à proximité du même bord longitudinal 2,3 de la bande 1, selon le sens d'avancement de la bande 1. Ainsi l'étanchéité des bords des plis est obtenue par thermo-soudure 12 lors de la réalisation des contacts entre les portions des zones longitudinales 8,9 selon l'étape d) du procédé.

La figure 2 est une vue partielle agrandie d'un filtre 100 pour véhicule automobile, obtenu selon la mise en oeuvre du procédé de l'invention. Ce filtre 100 est constitué d'une bande 1 de média filtrant plissé comportant des fibres synthétiques non tissées. Ces fibres comportent deux composants principaux, l'un des composants est un polyester et forme l'âme de la fibre et l'autre des composants est un copolyester et forme l'enveloppe de la fibre. Les plis du filtre 100 sont reliés entre eux par thermo-soudures 12 des enveloppes des fibres du média. D'autres natures de matériaux synthétiques peuvent être utilisées sans sortir du cadre de la présente invention.

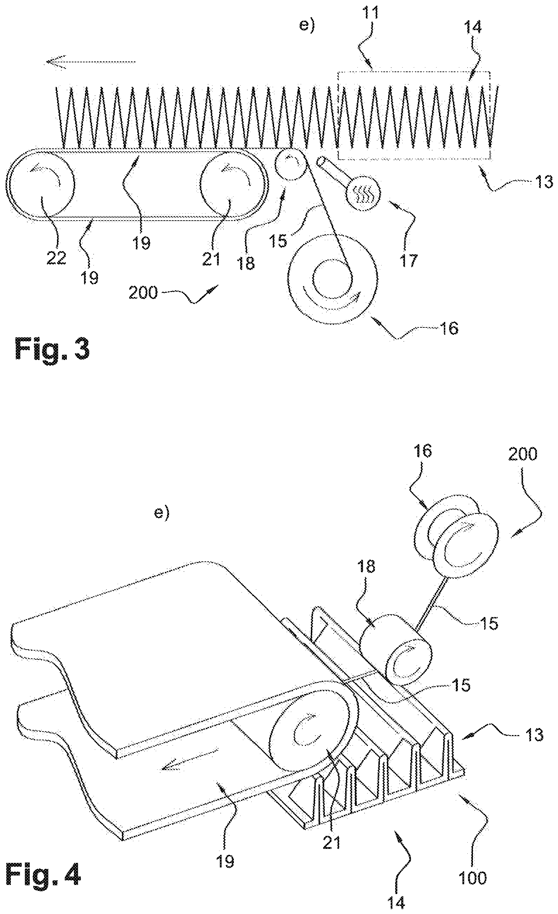

La figure 3 illustre une étape e) complémentaire au procédé consistant à déposer une cordelette 15 de fibres synthétiques reliant les sommets des plis par thermo-soudure, notamment à partir de la face avant 13 du média filtrant plissé, de sorte à rigidifier le filtre 100 sans réduire la surface de filtration de la face avant 13 par la présence d'une cordelette 15 thermo-soudée. A cet effet, une bobine 16 sur laquelle est enroulée la cordelette 15 de fibres synthétiques, dans un matériau similaire à celui des fibres de la bande 1 de média filtrant, est arrangée de sorte à délivrer la cordelette 15 sur la face avant 13 du média filtrant. Une troisième buse 17 de chauffage permet d'élever la température de la cordelette 15 jusqu'à atteindre la température de fusion de l'enveloppe des fibres conformément à la sous-étape i) du procédé. Puis un galet d'entrainement 18 adapté à entrainer le média filtrant plissé dans la direction d'avancement, permet de mettre en contact la cordelette 15 et les sommets de la face avant 13 du média filtrant déroulant en continu conformément à la sous-étape ii) du procédé. Ainsi, une cordelette 15 continue est thermo-soudée longitudinalement sur les sommets de plis de la bande 1 de média filtrant plissé. Le galet d'entrainement 18 permet également de presser la cordelette 15 déposée sur les sommets afin de finaliser la thermo-soudure.

Un tapis roulant 19, entrainé par un premier rouleau 21 et un deuxième rouleau 22, disposé en aval du galet d'entrainement 18 permet le mouvement de la bande 1 de média filtrant plissé selon la direction d'avancement au fur et à mesure de la réalisation de la thermo-soudure de la cordelette 15.

La cordelette 15 thermo-soudée permet le maintien d'un espacement régulier entre les sommets des plis et garantit cet espacement pendant la durée de vie de l'élément filtrant limitant ainsi la perte de charge lors de la rétention des poussières, elle permet aussi de rigidifier le média filtrant plissé 100 de sorte par exemple à éviter un enroulement du média 100 sur lui-même et de conserver une forme sensiblement plane. Un meilleur maintien de l'espacement entre les sommets des plis est obtenu lorsque la cordelette 15 est déposée de façon centrée entre les bords longitudinaux 2,3 de la bande 1 plissée.

Selon une variante non représentée, le galet d'entrainement 18 comprend également un moyen d'élévation de la température de la cordelette 15. Dans cette configuration, la troisième buse 17 de chauffage n'est plus indispensable dans le dispositif 200.

Selon une autre variante non illustrée, le dispositif 200 ne comprend pas de galet d'entrainement 18. Ainsi, le tapis roulant 19 participe à l'entrainement du média filtrant plissé et à l'étape de dépôt de la cordelette 15 conformément à la sous-étape ii) du procédé. Le premier rouleau 21 du tapis roulant 19, selon la direction d'avancement, permet de réaliser l'étape de pressage de la cordelette 15 déposée conformément à la sous-étape iii) du procédé. Dans cette configuration, le tapis roulant 19 ne pouvant être élevé à la température de fusion de la cordelette 15, la troisième buse 17 de chauffage est nécessaire.

La figure 4 illustre les mêmes étapes de procédé que celles illustrées à la figure 3 depuis la face avant 13 de la bande 1 de média filtrant plissé. La bobine 16 assure le déroulement de la cordelette 15 en fibres synthétiques pour un dépôt réalisé à l'aide du galet d'entrainement 18 sur les sommets des plis, de façon centrée entre les deux bords longitudinaux 2,3 de la bande 1.

Selon une variante de réalisation de l'étape e) du procédé non illustrée, il est procédé au dépôt d'un cordon de colle longitudinal pour relier les sommets des plis thermo-soudés à l'étape d) du procédé.

Selon une possibilité non illustrée, le procédé peut également comprendre une étape f) réalisée après l'étape e) consistant à découper la bande 1 de média filtrant plissée à la longueur du filtre 100 souhaitée. Ce filtre 100 comporte ainsi des thermo-soudures 12 assurant l'étanchéité des bords des plis et une cordelette 15 longitudinale, centrée entre les deux bords longitudinaux de la bande 1, maintenant le filtre 100 sous une forme sensiblement plane.

Ainsi, la présente invention propose un procédé de fabrication d'un filtre 100 amélioré, sans utilisation de colle pour obtenir l'étanchéité au niveau des bords des plis ou maintenir le média filtrant sous forme sensiblement plane, peu coûteux et facile à mettre en oeuvre.

La présente invention propose également un dispositif 200 de mise en oeuvre du procédé de fabrication qui est simplifié, efficace et nécessite peu de maintenance.

La présente invention propose en outre un filtre 100 pour véhicule automobile présentant de bonnes capacités de filtration, facilement recyclable du fait de l'absence de colle avec un coût de revient réduit.

Il va de soi que l'invention n'est pas limitée au mode de réalisation décrit ci-dessus à titre d'exemple mais qu'elle comprend tous les équivalents techniques et les variantes des moyens décrits ainsi que leurs combinaisons.

## Revendications

1. Procédé de fabrication d'un filtre (100), notamment un filtre (100) destiné à la filtration de l'air pour véhicule automobile, le procédé comprenant les étapes consistant à :
a) Dérouler une bande (1) de média filtrant comportant des fibres synthétiques, non tissées, présentant deux bords longitudinaux (2,3) et guider la bande (1) dans une direction d'avancement, puis dans cette direction d'avancement
b) Réaliser une pluralité de rainages (6) sur la bande (1) de média filtrant selon une direction transversale aux bords longitudinaux (2,3) puis
c) Elever la température de deux zones longitudinales (8,9) disposées à proximité chacune d'un bord longitudinal (2,3) de la bande (1) de média filtrant de manière à entrainer leur fusion, et ensuite
d) Plier la bande (1) de média filtrant le long de chaque rainage (6) de telle sorte qu'une portion d'une zone longitudinale (8,9) disposée en amont d'un rainage (6) dans le sens d'avancement de la bande (1) de média filtrant soit thermo-soudée avec une portion d'une zone longitudinale (8, 9) disposée en aval de ce rainage (6) dans le sens d'avancement de la bande (1).

2. Procédé de fabrication selon la revendication 1, **caractérisé en ce que** le procédé comprend une étape e) comprenant les sous-étapes suivantes consistant à
i) élever la température d'une cordelette (15) comprenant des fibres synthétiques jusqu'à atteindre la température de fusion des fibres, et
ii) déposer la cordelette (15) de façon longitudinale de sorte à relier les sommets des plis thermo-soudés formés à l'étape d) de plissage de la bande (1) de média filtrant, la cordelette (15) étant de préférence disposée de façon centrée entre les deux bords longitudinaux (2,3) de la bande (1).

3. Procédé de fabrication selon la revendication 2, **caractérisé en ce que** l'étape e) comprend en outre une sous-étape iii) consistant à presser la cordelette (15) déposée sur les sommets des plis.

4. Procédé de fabrication selon l'une des revendications 1 à 3, **caractérisé en ce que** l'élévation de température est obtenue par air chaud pulsé.

5. Procédé de fabrication selon l'une des revendications 1 à 4, **caractérisé en ce qu'**au moins une partie des fibres synthétiques de la bande (1) de média filtrant et/ou de la cordelette (15) comportent une âme et une enveloppe dont la température de fusion est moins importante que celle de l'âme.

6. Procédé de fabrication selon la revendication 5, **caractérisé en ce que** l'âme comprend un matériau de polyester et l'enveloppe comporte un matériau de copolyester.

7. Procédé de fabrication selon la revendication 6, **caractérisé en ce que** la température de fusion de l'enveloppe en matériau de copolyester est comprise entre 100 et 120°C.

8. Procédé de fabrication selon l'une des revendications 1 à 7, **caractérisé en ce que** l'élévation de température de l'étape c) et/ou de l'étape i) est réalisée jusqu'à atteindre une température comprise entre 100 et 250°C.

9. Dispositif (200) destiné à la mise en oeuvre du procédé de fabrication d'un filtre (100) selon l'une des revendications 1 à 8, **caractérisé en ce que** le dispositif (200) comprend au moins deux buses de chauffage (7) arrangées de sorte à souffler de l'air chaud pulsé, la chaleur de l'air étant adaptée pour élever la température des deux zones longitudinales (8,9) de la bande (1) de média filtrant selon l'étape c) dudit procédé et **en ce que** le dispositif (200) comprend des moyens de déroulement de la bande (1) dans une direction d'avancement, des moyens permettant de réaliser une pluralité de rainages sur la bande de média filtrant selon l'étape b) dudit procédé et deux vis sans fin (11) disposées de part et d'autres de la direction d'avancement afin de réaliser l'étape d) consistant à plier la bande (1) le long de chaque rainage (6), les deux vis sans fin étant disposées en aval des deux buses de chauffage dans la direction d'avancement.

10. Dispositif (200) selon la revendication 9, **caractérisé en ce que** le dispositif (200) comprend une troisième buse de chauffage (17) arrangée de sorte à souffler de l'air chaud pulsé de manière à entrainer la fusion de la cordelette (15) conformément à la sous-étape i) du procédé.

11. Dispositif (200) selon l'une des revendications 9 à 10, **caractérisé en ce que** le dispositif (200) comprend un tapis roulant (19) entrainé en rotation par un premier rouleau (21) et un deuxième rouleau (22), le tapis roulant (19) étant adapté à l'entrainement de la bande (1) de média filtrant plissé obtenu à l'étape d) du procédé.

12. Dispositif (200) selon l'une des revendications 9 à 11, **caractérisé en ce que** le dispositif (200) comprend un galet d'entrainement (18) de la cordelette (15) disposé en amont du tapis roulant (19) dans le sens d'avancement de la bande (1) de média filtrant plissé, le galet d'entrainement (18) étant adapté à la réalisation des sous-étape ii) et iii) du procédé.

13. Dispositif (200) selon la revendication 12, **caractérisé en ce que** le galet d'entrainement (18) comprend un moyen d'élévation de la température de la cordelette (15) conformément à l'étape i) du procédé.

## Patentansprüche

1. Verfahren zur Herstellung eines Filters (100), insbesondere eines Filters (100), der zur Filterung der Luft für ein Kraftfahrzeug bestimmt ist, wobei das Verfahren die Schritte umfasst des:
a) Abrollens einer zwei Längskanten (2, 3) aufweisenden, synthetische Vliesfasern umfassenden Filtermediumbahn (1), und Führens der Bahn (1) in eine Vorschubrichtung, und dann, in dieser Vorschubrichtung
b) Ausführens einer Vielzahl von Knicken (6) in der Filtermediumbahn (1) in einer Querrichtung zu den Längskanten (2, 3), und dann
c) Erhöhens der Temperatur von zwei Längsbereichen (8, 9), die jeder nahe einer Längskante (2, 3) der Filtermediumbahn (1) angeordnet sind, um deren Schmelzen zu bewirken, und anschließend
d) Faltens der Filtermediumbahn (1) entlang jedes Knicks (6) derart, dass ein Abschnitt eines Längsbereichs (8, 9), der in der Vorschubrichtung der Filtermediumbahn (1) stromaufwärts eines Knicks (6) angeordnet ist, mit einem Abschnitt eines Längsbereichs (8, 9), der in der Vorschubrichtung der Bahn (1) stromabwärts dieses Knicks (6) angeordnet ist, heißversiegelt wird.

2. Herstellungsverfahren nach Anspruch 1, **dadurch gekennzeichnet, dass** das Verfahren einen Schritt e) umfasst, der die folgenden Teilschritte umfasst des
i) Erhöhens der Temperatur einer synthetische Fasern umfassenden Schnur (15), bis die Schmelztemperatur der Fasern erreicht ist, und
ii) Aufbringens der Schnur (15) in Längsrichtung so, dass die Spitzen der im Schritt d) des Faltens der Filtermediumbahn (1) gebildeten heißversiegelten Falten verbunden werden, wobei die Schnur (15) vorzugsweise mittig zwischen den zwei Längskanten (2, 3) der Bahn (1) angeordnet wird.

3. Herstellungsverfahren nach Anspruch 2, **dadurch gekennzeichnet, dass** der Schritt e) weiter einen Teilschritt iii) des Anpressens der auf die Spitzen der Falten aufgebrachten Schnur (15) umfasst.

4. Herstellungsverfahren nach einem der Ansprüche 1 bis 3, **dadurch gekennzeichnet, dass** die Temperaturerhöhung durch pulsierende Heißluft erhalten wird.

5. Herstellungsverfahren nach einem der Ansprüche 1 bis 4, **dadurch gekennzeichnet, dass** mindestens ein Teil der synthetischen Fasern der Filtermediumbahn (1) und/oder der Schnur (15) einen Kern und eine Hülle umfassen, deren Schmelztemperatur niedriger ist als diejenige des Kerns.

6. Herstellungsverfahren nach Anspruch 5, **dadurch gekennzeichnet, dass** der Kern ein Polyestermaterial umfasst, und die Hülle ein Copolyestermaterial umfasst.

7. Herstellungsverfahren nach Anspruch 6, **dadurch gekennzeichnet, dass** die Schmelztemperatur der Hülle aus Copolyestermaterial im Bereich zwischen 100 und 120 °C liegt.

8. Herstellungsverfahren nach einem der Ansprüche 1 bis 7, **dadurch gekennzeichnet, dass** die Temperaturerhöhung aus dem Schritt c) und/oder aus dem Schritt i) ausgeführt wird, bis eine Temperatur im Bereich zwischen 100 und 250 °C erreicht ist.

9. Vorrichtung (200), die zur Umsetzung des Verfahrens zur Herstellung eines Filters (100) nach einem der Ansprüche 1 bis 8 bestimmt ist, **dadurch gekennzeichnet, dass** die Vorrichtung (200) mindestens zwei Heizdüsen (7) umfasst, die so eingerichtet sind, dass sie pulsierende Heißluft ausblasen, wobei die Wärme der Luft dafür geeignet ist, die Temperatur der zwei Längsbereiche (8, 9) der Filtermediumbahn (1) gemäß dem Schritt c) des Verfahrens zu erhöhen, und dadurch, dass die Vorrichtung (200) Mittel zum Abrollen der Bahn (1) in einer Vorschubrichtung, Mittel, die das Ausführen einer Vielzahl von Knicken in der Filtermediumbahn gemäß dem Schritt b) des Verfahrens ermöglichen, und zwei Schnecken (11) umfasst, die beidseits der Vorschubrichtung angeordnet sind, um den Schritt d) des Faltens der Bahn (1) entlang jedes Knicks (6) auszuführen, wobei die zwei Schnecken in der Vorschubrichtung stromabwärts der zwei Heizdüsen angeordnet sind.

10. Vorrichtung (200) nach Anspruch 9, **dadurch gekennzeichnet, dass** die Vorrichtung (200) eine dritte Heizdüse (17) umfasst, die so eingerichtet ist, dass sie pulsierende Heißluft ausbläst, um das Schmelzen der Schnur (15) entsprechend dem Teilschritt i) des Verfahrens zu bewirken.

11. Vorrichtung (200) nach einem der Ansprüche 9 bis 10, **dadurch gekennzeichnet, dass** die Vorrichtung (200) ein Fließband (19) umfasst, das von einer ersten Walze (21) und einer zweiten Walze (22) drehend angetrieben wird, wobei das Fließband (19) zum Antreiben der im Schritt d) des Verfahrens erhaltenen gefalteten Filtermediumbahn (1) geeignet ist.

12. Vorrichtung (200) nach einem der Ansprüche 9 bis 11, **dadurch gekennzeichnet, dass** die Vorrichtung (200) eine Rolle (18) zum Antreiben der Schnur (15) umfasst, die in der Vorschubrichtung der gefalteten Filtermediumbahn (1) stromaufwärts des Fließbandes (19) angeordnet ist, wobei die Antriebsrolle (18) zum Ausführen der Teilschritte ii) und iii) des Verfahrens geeignet ist.

13. Vorrichtung (200) nach Anspruch 12, **dadurch gekennzeichnet, dass** die Antriebsrolle (18) ein Mittel zum Erhöhen der Temperatur der Schnur (15) entsprechend dem Schritt i) des Verfahrens umfasst.

## Claims

1. A method for manufacturing a filter (100), in particular a filter (100) intended for the air filtration for a motor vehicle, the method comprising the steps consisting in:
a) Unwinding a strip (1) of filtering medium including synthetic, nonwoven fibers having two longitudinal edges (2, 3) and guiding the strip (1) in an advance direction, then in this advance direction
b) Making a plurality of creases (6) on the strip (1) of filtering medium according to a direction transverse to the longitudinal edges (2, 3), then
c) Raising the temperature of two longitudinal areas (8, 9) each disposed proximate to a longitudinal edge (2, 3) of the strip (1) of filtering medium so as to cause the melting thereof, and afterwards
d) Folding the strip (1) of filtering medium along each crease (6) such that a portion of a longitudinal area (8, 9) disposed upstream of a crease (6) in the advance direction of the strip (1) of filtering medium is heat-welded with a portion of a longitudinal area (8, 9) disposed downstream of this crease (6) in the advance direction of the strip (1).

2. The manufacturing method according to claim 1, **characterized in that** the method comprises a step e) comprising the following sub-steps consisting in:
i) raising the temperature of a cord (15) comprising synthetic fibers until reaching the melting temperature of the fibers, and
ii) depositing the cord (15) longitudinally so as to connect the tops of the heat-welded folds formed at step d) of pleating the strip (1) of filtering medium, the cord (15) being preferably disposed centrally between the two longitudinal edges (2, 3) of the strip (1).

3. The manufacturing method according to claim 2, **characterized in that** step e) further comprises a sub-step iii) consisting in pressing the cord (15) deposited on the tops of the folds.

4. The manufacturing method according to any of claims 1 to 3, **characterized in that** the temperature rise is obtained by pulsed warm air.

5. The manufacturing method according to any of claims 1 to 4, **characterized in that** at least one portion of the synthetic fibers of the strip (1) of filtering medium and/or the cord (15) include a core and an envelope whose melting temperature is less significant than that of the core.

6. The manufacturing method according to claim 5, **characterized in that** the core comprises a polyester material and the envelope includes a copolyester material.

7. The manufacturing method according to claim 6, **characterized in that** the melting temperature of the envelope made of a copolyester material is comprised between 100 and 120°C.

8. The manufacturing method according to any of claims 1 to 7, **characterized in that** the temperature rise of step c) and/or step i) is carried out until reaching a temperature comprised between 100 and 250°C.

9. A device (200) intended for the implementation of the method for manufacturing a filter (100) according to any of claims 1 to 8, **characterized in that** the device (200) comprises at least two heating nozzles (7) arranged so as to blow pulsed warm air, the heat of the air being adapted to raise the temperature of the two longitudinal areas (8, 9) of the strip (1) of filtering medium according to step c) of said method and **in that** the device (200) comprises means for unwinding the strip (1) of filtering medium in an advance direction, means allowing making a plurality of creases on the filtering medium strip according to step b) of said method and two worm screws (11) disposed on either side of the advance direction in order to carry out step d) consisting in folding the strip (1) along each crease (6), the two worm screws being disposed downstream of the two heating nozzles in the advance direction.

10. The device (200) according to claim 9, **characterized in that** the device (200) comprises a third heating nozzle (17) arranged so as to blow forced warm air so as to cause the melting of the cord (15) in accordance with sub-step i) of the method.

11. The device (200) according to any of claims 9 to 10, **characterized in that** the device (200) comprises a conveyor belt (19) driven in rotation by a first roll (21) and a second roll (22), the conveyor belt (19) being adapted for driving the pleated strip (1) of filtering medium obtained at step d) of the method.

12. The device (200) according to any of claims 9 to 11, **characterized in that** the device (200) comprises a roller (18) for driving the cord (15) disposed upstream of the conveyor belt (19) in the advance direction of the strip (1) of pleated filtering medium, the drive roller (18) being adapted for carrying out sub-steps ii) and iii) of the method.

13. The device (200) according to claim 12, **characterized in that** the drive roller (18) comprises a means for raising the temperature of the cord (15) in accordance with step i) of the method.
